# FASCICULE DE BREVET EUROPEEN

(11) **EP 2 480 377 B1**
(45) Date de publication et mention de la délivrance du brevet: **26.02.2014**
(21) Numéro de dépôt: 10770554.3
(22) Date de dépôt: 14.09.2010
(51) Int. Cl.: B24C 1/00, B65D 77/00, F17C 13/00

(54) **PROCÉDÉ POUR ÉLIMINER UN REVÊTEMENT COMPOSITE PRÉSENT SUR LA SURFACE D'UNE BOUTEILLE DE GAZ**
VERFAHREN ZUM ENTFERNEN EINER VERBUND-SCHICHT AUF DER OBERFLÄCHE EINES GASBEHÄLTERS
METHOD FOR REMOVING COMPOSITE COATING PRESENT ON THE SURFACE OF A GAS CARTRIDGE

(30) Priorité: 23.09.2009 FR 0956538
(43) Date de publication de la demande: 01.08.2012
(73) Titulaire: L'Air Liquide Société Anonyme pour l'Etude et l'Exploitation des Procédés Georges Claude, 75007 Paris (FR)
(72) Inventeur: QUINTARD, Jacques, F-95590 Presles (FR); RICHARD, Frédéric, F-95620 Parmain (FR); TRUCHOT, Charles, F-78300 Poissy (FR)
(74) Mandataire: Pittis, Olivier
(86) Numéro de dépôt international: PCT/FR2010/051903
(87) Numéro de publication internationale: WO 2011/036373

(56) Documents cités:
- EP-A1- 0 887 088
- DE-A1- 19 709 621
- DE-A1- 19 807 635
- DE-A1-102008 051 557
- US-A- 5 456 629
- US-A- 5 782 253
- US-A1- 2006 049 274

## Description

L'invention porte sur un procédé permettant d'éliminer un revêtement composite, présent sur le corps d'une bouteille de gaz utilisée pour stocker du gaz sous pression de sorte de pouvoir ensuite recycler le corps de ladite bouteille de gaz.

De manière générale, il existe quatre types de bouteilles de gaz utilisées pour réaliser le stockage des gaz, à savoir les bouteilles de :
- type I qui regroupe les bouteilles entièrement en métal (acier ou aluminium),
- type II qui regroupe les bouteilles constituées d'un corps en métal (acier ou aluminium), revêtu de composite, par exemple en Kevlar/Epoxy,
- type III qui regroupe les bouteilles constituées d'un corps en aluminium d'épaisseur plus fine que le corps des types I et II, revêtu de composite, par exemple en Kevlar/Epoxy, et
- type IV qui regroupe les bouteilles constituées d'un corps en polyéthylène ou polyamide soufflé revêtu en composite.

L'intérêt des types II et III réside dans le fait que les bouteilles, tout en conservant les mêmes propriétés mécaniques que celles de type I, sont plus légères. Le type IV est utilisé dans des cas très spécifiques. Les bouteilles de type II et III ont un corps, appelé « liner », dans lequel se trouve le gaz, qui est en métal et est entouré d'une « peau » en composite.

Cependant, les normes environnementales européennes sont de plus en plus drastiques et imposent de désormais prévoir, dès la conception des produits, une manière d'opérer leur recyclage. Ainsi, le recyclage de ces bouteilles se fait actuellement de la manière suivante.

D'abord, on coupe la bouteille en deux parties et on récupère, d'une part, le métal et, d'autre part, le composite que l'on broie.

Or, le fait de couper le liner métallique en deux demi-bouteilles, ne permet pas le recyclage direct en tant que contenant de gaz desdits liners. On ne le recycle qu'en tant que métal de base qu'il faut refondre et reformer pour fabriquer de nouveaux liners. Le recyclage actuel n'est donc pas optimisé.

Le document DE 198 07 635 décrit un procédé pour éliminer une couche de revêtement sur la surface d'un récipient.

Le document US 2006-0049274 décrit le nettoyage d'une bouteille de gaz.

Le problème à résoudre est dès lors de proposer un procédé permettant de réaliser un recyclage efficace et écologique des bouteilles de gaz, en particulier de type II et III, c'est-à-dire de bouteilles de gaz formées d'un corps en métal ou liner revêtu de composite, lequel procédé ne nécessite pas de coupage en deux des corps des bouteilles usagées pour en retirer le revêtement composite à leur surface, et permet dès lors de réutiliser lesdits corps de bouteilles usagées sans avoir à les refondre et à les reformer subséquemment.

La solution de l'invention est un procédé pour éliminer au moins une partie d'au moins une couche d'un revêtement composite formé de fibres et d'au moins une résine, présent sur la surface du corps d'une bouteille de gaz, dans lequel on distribue au contact dudit revêtement au moins un jet d'azote liquide à une température inférieure à -100°C et à une pression d'au moins 500 bars de manière à éliminer au moins une partie de ladite couche de revêtement présent sur le corps de la bouteille de gaz.

En d'autres termes, un ou plusieurs jets d'azote liquide sous pression sont distribués de manière à venir impacter la surface du revêtement composite à éliminer. L'impact du ou des jets avec le revêtement va alors provoquer son décollement du corps de la bouteille de gaz et son évacuation sous l'effet de la pression déployée par le jet ou les jets d'azote liquide.

Selon le cas, le procédé de l'invention peut comprendre l'une ou plusieurs des caractéristiques suivantes :
- le revêtement composite est formé de fibres et d'au moins une résine thermodurcissable ou thermoplastique.
- le revêtement comprend des fibres de verre, de basalte, de carbone ou d'aramide
- le revêtement comprend une résine thermodurcissable choisie parmi les résines époxydes, les résines polyuréthanes et les résines vinyliques.
- le revêtement comprend une résine thermoplastique choisie parmi les résines de type polyéthylène, polypropylène, polyamide-6 ou polyamide-12.
- le revêtement composite du corps est en Kevlar/époxy ou en carbone/époxy.
- au moins un jet d'azote liquide est distribué par au moins une buse de distribution.
- au moins un jet d'azote liquide est distribué par plusieurs buses rotatives ou oscillantes.
- le corps de la bouteille de gaz est en métal, de préférence en acier, en aluminium ou en céramique.
- le corps de la bouteille de gaz est en polyéthylène ou polyamide.
- la pression du jet d'azote liquide est inférieure à 4500 bars, de préférence entre 1000 et 4000 bars, de préférence encore de l'ordre de 3000 à 3800 bars.
- l'azote liquide est à une température inférieure à environ -130°C, de préférence entre environ -140°C et -230°C.
- on opère une rotation de la bouteille de gaz relativement à la ou aux buses distribuant l'azote liquide sous pression.

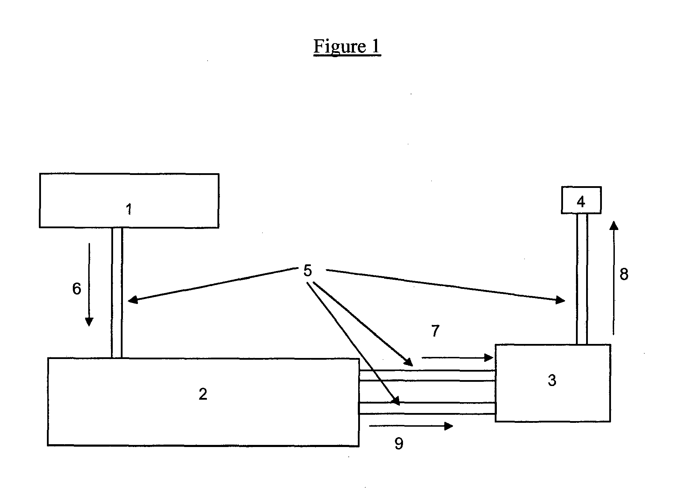

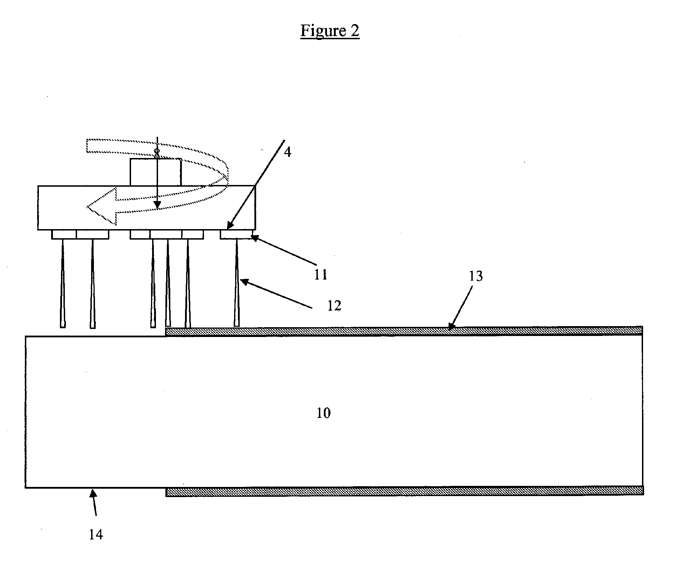

La solution de l'invention consiste donc à détacher la couche de composite présente à la surface du corps de la bouteille à l'aide d'un ou plusieurs jets d'azote liquide à très haute pression et peut être mise en oeuvre au moyen d'une installation comme celle de la Figure 1 équipée de l'outil porte-buses schématisé en Figure 2.

Ainsi, comme illustré en Figue 1, une installation de décapage de surface par jets de liquide cryogénique utilisable pour enlever la couche superficielle de revêtement 13 en composite des bouteilles 10 de gaz se compose d'un réservoir de stockage 1, telle une citerne, d'azote liquide (ci-après appelé LN₂) qui alimente, via une ligne d'amenée 6 d'azote liquide sous basse pression, c'est-à-dire à environ de 3 à 6 bar et à une température de l'ordre de - 180°C, un dispositif de compression 2, avec compresseur et échangeur thermique amont interne permettant une mise à ultra haute pression (UHP) de l'azote liquide. Le dispositif de compression 2 permet donc de réaliser la compression du LN₂ provenant du réservoir de stockage 1.

Le LN₂ à la première pression (UHP) est alors véhiculé via une ligne de convoyage (7), jusqu'à un échangeur thermique aval 3 externe où le LN2 UHP subit un refroidissement avec de l'azote liquide à pression atmosphérique (en 9), pour obtenir typiquement de l'azote liquide UHP.

Il en résulte du LN₂ à une pression (UHP) typiquement supérieure à 1000 bar, généralement comprise entre 2000 bar et 5000 bar, avantageusement comprise entre environ 3000 et 4000 bar, et à une température inférieure à -140°C, typiquement entre -140°C et - 180°C, par exemple de l'ordre d'environ -150 à -160°C, qui est envoyé (en 8) vers l'outil 4 de décapage ou analogue munis de buses de distribution 11 délivrant des jets 12 d'azote liquide UHP.

Le réservoir 1 fixe ou mobile de grande capacité, telle une citerne de camion ou un réservoir de stockage de plusieurs milliers de litres d'azote liquide, est généralement situé à l'extérieur des bâtiments, c'est-à-dire à l'air libre.

Le réservoir 1 est relié à l'installation au moyen de tuyauteries calorifugées comprenant une ou des vannes de contrôle. En outre, le convoyage du LN₂ entre les différents éléments du système se fait également via des canalisations calorifugées. Le débit global gazeux est approximativement de 201/min soit 15 m³/min.

En général, le dispositif de compression 2, l'échangeur externe 3 et surtout l'outil 4 sont en principe situés dans un ou des bâtiments.

Comme illustré sur la Figure 2, pour décaper la couche de revêtement 13 en composite, c'est-à-dire formé d'un mélange fibres/résine, présent à la surface des bouteilles 10 de gaz, on utilise un outil 4 équipé de buses 11 alimentées par du LN₂ UHP (en 8) que l'on met préférentiellement en rotation ou en oscillation de manière à obtenir des jets 12 de LN₂ UHP qui sont utilisés pour décaper la surface des bouteilles 10 à traiter, éliminer ainsi la couche de revêtement surfacique composite qui s'y trouve et pouvoir récupérer ensuite des corps 14 de bouteilles 10 décapés, c'est-à-dire sans revêtement 13.

Les corps 14 de bouteilles 10 peuvent ensuite être recyclés, notamment être recouverts d'une nouvelle couche de revêtement 13 pour pouvoir être réutilisés pour le stockage de gaz sous pression.

### Exemple

Afin de montrer l'efficacité du procédé de l'invention, des essais ont été réalisés dans les conditions suivantes.

Une bouteille de gaz cylindrique de 1,68 m de hauteur et de 0,23 m de diamètre dont le corps d'acier ou d'aluminium est recouvert d'une couche de revêtement surfacique de 10 mm d'un composite de type Kevlar/époxy est traitée par des jets d'azote liquide à 3200 bar et à une température de -155 °C. Lesdits jets d'azote sont éjectés par un outil rotatif à plusieurs buses, comme celui de la Figure 2. La trace décrite est une bande de 0,054 m. La vitesse d'avance de l'outil rotatif est de 1 m/min. Lorsque toute la longueur de la bouteille a été traitée sur une largueur de 0,054 m, la bouteille subit une rotation de 0,053 m (recouvrement de 1 mm).

Les résultats d'essais montrent que la « peau » ou revêtement surfacique en composite se décroche très facilement du corps sous l'effet des jets d'azote liquide sous haute pression. Les corps des bouteilles ont été décapés en environ 18 à 20 minutes.

Par ailleurs, le rendement d'une telle opération de décapage est de l'ordre de 4 m²/h. Naturellement, l'utilisation de plusieurs outils simultanément permet d'augmenter la vitesse de traitement d'une bouteille.

En outre, le procédé utilisé n'impacte pas l'intégrité du corps de bouteille, c'est-à-dire que les jets d'azote n'attaquent pas le métal, ce qui permet de le réutiliser de manière aisée et constitue donc un procédé écologique et respectueux de l'environnement.

## Revendications

1. Procédé pour éliminer au moins une partie d'au moins une couche d'un revêtement composite formé de fibres et d'au moins une résine présent sur la surface du corps d'une bouteille de gaz (10), dans lequel on distribue au contact dudit revêtement au moins un jet (12) d'azote liquide à une température inférieure à -100°C et à une pression d'au moins 500 bars de manière à éliminer au moins une partie de ladite couche de revêtement présent sur le corps de la bouteille de gaz (10).

2. Procédé selon la revendication précédente, **caractérisé en ce que** le revêtement composite est formé de fibres et d'au moins une résine thermodurcissable ou thermoplastique.

3. Procédé selon l'une des revendications précédentes, **caractérisé en ce que** le revêtement comprend des fibres de verre, de basalte, de carbone ou d'aramide

4. Procédé selon l'une des revendications précédentes, **caractérisé en ce que** le revêtement comprend une résine thermodurcissable choisie parmi les résines époxydes, les résines polyuréthanes et les résines vinyliques, ou une résine thermoplastique choisie parmi les résines de type polyéthylène, polypropylène, polyamide-6 ou polyamide-12.

5. Procédé selon l'une des revendications précédentes, **caractérisé en ce que** le revêtement composite du corps est en Kevlar/époxy ou en carbone/époxy.

6. Procédé selon l'une des revendications précédentes, **caractérisé en ce que** qu'au moins un jet d'azote liquide est distribué par au moins une buse de distribution, de préférence plusieurs jets d'azote liquide sont distribués par plusieurs buses rotatives ou oscillantes.

7. Procédé selon l'une des revendications 1 à 5, **caractérisé en ce que** le corps du récipient est en un métal choisi parmi l'acier ou l'aluminium, en céramique, en polyéthylène ou en polyamide.

8. Procédé selon l'une des revendications précédentes, **caractérisé en ce que** la pression du jet d'azote liquide est inférieure à 4500 bars, de préférence entre 1000 et 4000 bars, de préférence encore de l'ordre de 3000 à 3800 bars.

9. Procédé selon l'une des revendications précédentes, **caractérisé en ce que** l'azote est à une température inférieure à -130°C, de préférence entre -140°C et -230°C.

10. Procédé selon l'une des revendications précédentes, **caractérisé en ce qu'**on opère une rotation du récipient relativement à la ou aux buses distribuant de l'azote liquide.

## Patentansprüche

1. Verfahren zum Entfernen von mindestens einem Teil mindestens eines Überzugs einer Verbundschicht, die aus Fasern und mindestens einem Harz gebildet ist, auf der Oberfläche des Körpers einer Gasflasche (10), wobei im Kontakt mit der Schicht mindestens ein Strahl (12) flüssigen Stickstoffs bei einer Temperatur unter -100 °C und einem Druck von mindestens 500 Bar verteilt wird, um mindestens einen Teil des auf dem Körper der Gasflasche (10) vorhandenen Schichtüberzugs zu entfernen.

2. Verfahren nach dem vorhergehenden Anspruch, **dadurch gekennzeichnet, dass** die Verbundschicht aus Fasern und mindestens einem duroplastischen oder thermoplastischen Harz gebildet ist.

3. Verfahren nach einem der vorhergehenden Ansprüche, **dadurch gekennzeichnet, dass** die Schicht Glas-, Basalt-, Kohlenstoff- oder Aramidfasern umfasst.

4. Verfahren nach einem der vorhergehenden Ansprüche, **dadurch gekennzeichnet, dass** die Schicht ein duroplastisches Harz umfasst, ausgewählt aus Epoxidharzen, Polyurethanharzen und Vinylharzen, oder ein thermoplastisches Harz, ausgewählt aus den Harzen vom Typ Polyethylen, Polypropylen, Polyamid-6 oder Polyamid-12.

5. Verfahren nach einem der vorhergehenden Ansprüche, **dadurch gekennzeichnet, dass** die Verbundschicht des Körpers aus Kevlar/Epoxidharz oder aus Kohlenstoff/Epoxidharz besteht.

6. Verfahren nach einem der vorhergehenden Ansprüche, **dadurch gekennzeichnet, dass** mindestens ein Strahl flüssigen Stickstoffs mit mindestens einer Verteilerdüse verteilt wird, vorzugsweise mehrere Strahlen flüssigen Stickstoffs mit mehreren Dreh- oder Schwenkdüsen verteilt werden.

7. Verfahren nach einem der Ansprüche 1 bis 5, **dadurch gekennzeichnet, dass** der Körper des Behälters aus einem Metall, ausgewählt aus Stahl oder Aluminium, aus Keramik, aus Polyethylen oder aus Polyamid besteht.

8. Verfahren nach einem der vorhergehenden Ansprüche, **dadurch gekennzeichnet, dass** der Druck des Strahls flüssigen Stickstoffs unter 4500 Bar, vorzugsweise zwischen 1000 und 4000 Bar, noch bevorzugter von 3000 bis 3800 Bar beträgt.

9. Verfahren nach einem der vorhergehenden Ansprüche, **dadurch gekennzeichnet, dass** der Stickstoff eine Temperatur von unter -130 °C, vorzugsweise zwischen -140 °C und - 230 °C aufweist.

10. Verfahren nach einem der vorhergehenden Ansprüche, **dadurch gekennzeichnet, dass** der Behälter bezogen auf die Düse oder Düsen, die den flüssigen Stickstoff verteilt bzw. verteilen, gedreht wird.

## Claims

1. Process for removing at least some of at least one layer of a composite coating formed from fibres and at least one resin, which coating is present on the surface of the body of a gas cylinder (10), wherein said coating is brought into contact with at least one liquid-nitrogen jet (12) at a temperature lower than -100 °C and at a pressure of at least 500 bar, so as to remove at least some of said coating layer which is present on the body of the gas cylinder (10).

2. Process according to the preceding claim, **characterised in that** the composite coating is formed from fibres and at least one thermosetting or thermoplastic resin.

3. Process according to any of the preceding claims, **characterised in that** the coating comprises glass, basalt, carbon or aramid fibres.

4. Process according to any of the preceding claims, **characterised in that** the coating comprises a thermosetting resin chosen from epoxy resins, polyurethane resins and vinyl resins or a thermoplastic resin chosen from resins of the polyethylene, polypropylene, polyamide-6 and polyamide-12 types.

5. Process according to any of the preceding claims, **characterised in that** the composite coating of the body is made of Kevlar/epoxy or of carbon/epoxy.

6. Process according to any of the preceding claims, **characterised in that** at least one liquid-nitrogen jet is delivered via at least one delivery nozzle, preferably a plurality of liquid-nitrogen jets are delivered by a plurality of rotating or oscillating nozzles.

7. Process according to any of claims 1 to 5, **characterised in that** the body of the container is made of a metal chosen from steel or aluminium, of ceramic material, of polyethylene or of polyamide.

8. Process according to any of the preceding claims, **characterised in that** the pressure of the liquid-nitrogen jet is less than 4500 bar, preferably between 1000 and 4000 bar, more preferably in the order of 3000 to 3800 bar.

9. Process according to any of the preceding claims, **characterised in that** the nitrogen is at a temperature lower than -130 °C, preferably between -140 °C and -230 °C.

10. Process according to any of the preceding claims, **characterised in that** the container is rotated relative to the nozzle(s) delivering liquid nitrogen.
